# EUROPÄISCHE PATENTSCHRIFT

(11) **EP 2 596 429 B1**
(45) Veröffentlichungstag und Bekanntmachung des Hinweises auf die Patenterteilung: **27.06.2018**
(21) Anmeldenummer: 11724592.8
(22) Anmeldetag: 27.05.2011
(51) Int. Cl.: G06F 8/65, G06F 9/445

(54) **VERFAHREN ZUM AUSFÜHREN EINES DIENSTPROGRAMMS, COMPUTERSYSTEM UND COMPUTERPROGRAMMPRODUKT**
METHOD FOR EXECUTING A UTILITY PROGRAM, COMPUTER SYSTEM AND COMPUTER PROGRAM PRODUCT
PROCÉDÉ SERVANT À ÉXECUTER UN PROGRAMME DE SERVICE, SYSTÈME INFORMATIQUE ET PRODUIT DE PROGRAMME INFORMATIQUE

(30) Priorität: 23.07.2010 DE 102010032040
(43) Veröffentlichungstag der Anmeldung: 29.05.2013
(73) Patentinhaber: Fujitsu Limited, Kawasaki-shi Kanagawa 211-8588 (JP)
(72) Erfinder: KARPA, Wolfgang, 33129 Delbrück (DE); ARNOLD, Lothar, 33129 Delbrück (DE); EMMERICH, Helmut, 33184 Altenbeken (DE); UNRUH, Walter, 32108 Bad Salzuflen (DE)
(74) Vertreter: Epping - Hermann - Fischer
(86) Internationale Anmeldenummer: PCT/EP2011/058710
(87) Internationale Veröffentlichungsnummer: WO 2012/010354

(56) Entgegenhaltungen:
- US-B1- 6 308 325

## Beschreibung

Es wird ein Verfahren zum Ausführen eines Dienstprogramms auf einem Computersystem mit einem Systemmanagementbaustein offenbart. Darüber hinaus werden ein Computersystem beziehungsweise ein Computerprogrammprodukt beschrieben, die zur Ausführung eines derartigen Verfahrens eingerichtet sind.

Computersystem mit einem Systemmanagementbaustein, auch bekannt als Baseboard Management Controller (BMC) oder Remote Management Controller (RMC) sind insbesondere aus dem Bereich hochleistungsfähiger Servercomputer bekannt. Dabei dient der Systemmanagementbaustein unterschiedlichen Zwecken. Zum einen überwacht er die korrekte Funktion eines oder mehrerer Prozessoren oder sonstiger Komponenten des Computersystems, um eventuell auftretende Fehler zu erkennen und einen eventuell erforderlichen Neustart des Computersystems durchzuführen. Des Weiteren dient der Systemmanagementbaustein auch zur Fernwartung des Computersystems. Hierfür sind derartige Systeme oftmals mit einer Netzwerkschnittstelle ausgerüstet, die eine weitgehende Konfiguration des Computersystems über einen Wartungsrechner durch einen Systemadministrator gestatten.

Eine beispielhafte Wartungsaufgabe besteht in dem Einspielen neuer Firmwarekomponenten für das Computersystem. Unter Firmware versteht man im Allgemeinen solche Software-Komponenten, die fest in entsprechende Hardwarebausteine eingebettet sind und komponentenspezifische Funktionen bereitstellen.

In der Regel weisen Systemkomponenten, wie beispielsweise eine Hauptplatine eines Computersystems, aber auch Komponenten wie der Systemmanagementbaustein, hierzu nicht-flüchtige Speicher in Form von Flashspeichern auf. In diesen Speichern ist hardwarespezifischer Programmcode zum Ansteuern der entsprechenden Komponenten gespeichert, der unmittelbar nach dem Start der jeweiligen Komponente zur Verfügung steht und nicht erst durch ein Betriebssystem von einem weiteren Speichermedium geladen werden muss.

Zum Aktualisieren derartiger Firmwarekomponenten sind unterschiedliche Methoden bekannt. Beispielsweise kann ein Betriebssystem des Computersystems wie gewöhnlich gestartet werden und dann ein spezielles Dienstprogramm zum Aktualisieren eines oder mehrerer Firmwarekomponenten gestartet werden. Die zur Aktualisierung verwendeten Daten können entweder durch das Dienstprogramm selbst beschafft werden oder werden auf anderem Wege an das Computersystem übermittelt. Beispielsweise können aktualisierte Firmwaredaten zuvor aus dem Internet geladen oder mittels eines Datenträgers oder Datennetzwerks auf das Computersystem übertragen worden sein.

Aus der US 6,308,325 B1 ist eine Vorrichtung und ein Verfahren zum Herunterladen von Daten in ein elektronisches Gerät, insbesondere ein Festplattenlaufwerk bekannt. Dabei wird ein Typ des elektronischen Geräts wird durch eine Herunterlade-Entität bestimmt und Daten der Herunterlade-Entität, die nicht dem bestimmten Typ zugeordnet sind, verworfen, so dass nur dem Gerät zugeordnete Daten in dem elektronischen Gerät verbleiben.

Da die Aktualisierung der Firmware einen tiefgreifenden Eingriff in das Computersystem darstellt, ist es dabei in der Regel nicht möglich, weitere Anwendungen auf dem Computersystem auszuführen. Zudem ist nach dem Aktualisieren der Firmware in der Regel ein Neustart des Computersystems erforderlich. Dies bedingt verhältnismäßig lange Ausfallzeiten, in denen ein Computersystem nicht für Anwendungen zur Verfügung steht.

Aufgabe der Erfindung ist es, ein besonders effizientes Verfahren zur Ausführung von Dienstprogrammen, insbesondere von Dienstprogrammen zum Aktualisieren von Firmwarekomponenten, zu beschreiben. Darüber hinaus soll ein Computersystem und ein Computerprogrammprodukt beschrieben werden, die zur Ausführung des Verfahrens geeignet sind.

Die genannte Aufgabe wird durch ein Verfahren zum Ausführen eines Dienstprogramms auf einem Computersystem mit einem unabhängig von einem Prozessor des Computersystems betreibbaren Systemmanagementbaustein, wobei der Systemmanagementbaustein einen Mikrocontroller sowie einen nicht-flüchtigen Speicher umfasst, über einen Netzwerkanschluss mit einem Datennetzwerk verbunden und zur Fernwartung des Computersystems eingerichtet ist, mit folgenden Schritten gelöst:
- Aktivieren eines Grafikspeicher des Computersystems,
- Herunterladen eines Speicherabbilds umfassend das auszuführende Dienstprogramm durch den Systemmanagementbaustein von einer Datenquelle in dem Datennetzwerk, wobei das auszuführende Dienstprogramm zum Aktualisieren einer Firmwarekomponente des Computersystems eingerichtet ist und in dem Speicherabbild des Weiteren Daten zum Aktualisieren der Firmwarekomponente enthalten sind,
- Ablegen des Speicherabbilds in dem Grafikspeicher durch den Systemmanagementbaustein,
- Kopieren des Speicherabbilds von dem Grafikspeicher in einen Hauptspeicher des Computersystems durch den Prozessor des Computersystems und
- Ausführen des Dienstprogramms durch den Prozessor des Computersystems zum Aktualisieren der Firmwarekomponente.

Der Erfindung liegt unter anderem die Erkenntnis zugrunde, dass durch eine Entkopplung des Herunterladens eines Speicherabbilds und einem Ausführen des Dienstprogramms, das in dem heruntergeladenen Abbild enthalten ist, die Ausführung effizienter gestaltet werden kann. Zu dieser Entkopplung wird gemäß dem vorgeschlagenen Verfahren das Speicherabbild zunächst durch den Systemmanagementbaustein beschafft und in einem Grafikspeicher des Computersystems abgelegt. Erst danach wird die Systemfirmware des Computersystems aktiviert und das Speicherabbild von dem Grafikspeicher in den Hauptspeicher des Computersystems kopiert. Auf diese Weise steht das kopierte Speicherabbild dem Computersystem wenige Momente nach dem Aktivieren der Systemfirmware zur Verfügung und kann unmittelbar beim Systemstart ausgeführt werden. Sind in dem Speicherabbild sowohl ein Dienstprogramm zum Aktualisieren einer Firmwarekomponente als auch Daten zum Aktualisieren einer Firmwarekomponente enthalten, können Firmwarekomponenten des Computersystems auf einfache Weise ohne Nachladen etwaiger zu installierender Komponenten aktualisiert werden.

Gemäß einer vorteilhaften Ausgestaltung ist das auszuführende Dienstprogramm zum Aktualisieren einer Systemfirmware des Computersystems eingerichtet.

Gemäß einer vorteilhaften Ausgestaltung wird im Schritt des Herunterladens ein gepacktes Speicherabbild geladen und vor dem Ausführen des Dienstprogramms wird das gespeicherte Speicherabbild durch die Systemfirmware entpackt. Das Packen von Speicherabbildern erlaubt eine effiziente Übertragung und Handhabung des zu übertragenden Speicherabbilds in einem, gegebenenfalls komprimierten, Datenpaket.

Gemäß einer weiteren vorteilhaften Ausgestaltung wird der Schritt des Kopierens vor einer Aktivierung einer Firmwarekomponente zum Initialisieren einer Grafikkomponente ausgeführt. Wird das Speicherabbild bereits vor einer Aktivierung einer Firmwarekomponente zum Initialisieren einer Grafikkomponente ausgeführt, kann von weiten Teilen des Grafikspeichers, gegebenenfalls den gesamten Grafikspeicher, Gebrauch gemacht werden, so dass auch verhältnismäßig umfangreiche Speicherabbilder in dem erfindungsgemäßen Verfahren verarbeitet werden können.

Gemäß einer weiteren vorteilhaften Ausgestaltung werden die Schritte des Aktivierens des Grafikspeichers, Herunterladens und Ablegens des Speicherabbilds in einem Ruhezustand des Computersystems ausgeführt und die Schritte des Kopierens des Speicherabbilds und Ausführens des Dienstprogramms in einem Betriebszustand des Computersystems ausgeführt. Eine derartige Ausgestaltung weist den Vorteil auf, dass das verhältnismäßige langwierige Herunterladen des Speicherabbilds in einem inaktiven Zustand des Computersystems, beispielsweise über Nacht oder in einer Betriebspause, durchgeführt werden kann und das Dienstprogramm nachfolgend unmittelbar beim Systemstart zur Verfügung steht und ausgeführt werden kann.

Gemäß einer weiteren vorteilhaften Ausgestaltung werden die Schritte des Herunterladens des Speicherabbilds in einem vorherigen Betriebszustand des Computersystems und die Schritte des Aktivierens des Grafikspeichers und Ablegens des Speicherabbilds bei einem Neustart des Computersystems ausgeführt und die Schritte des Kopierens des Speicherabbilds und Ausführens des Dienstprogramms finden in einem auf den Neustart folgenden Betriebszustand des Computersystem statt. Bei dieser Ausgestaltung wird das erforderliche Speicherabbild unabhängig vom Betrieb des Computersystems durch den Systemmanagementcontroller, sozusagen im Hintergrund, heruntergeladen. Bei einem nachfolgend oder auch unabhängig davon ausgelösten Neustart steht das Speicherabbild dann unmittelbar zur Verfügung, so dass das Dienstprogramm direkt nach dem Neustart ausgeführt werden kann. Auf diese Weise lässt sich die so genannte Downtime, also die Zeit in dem das Computersystem sich nicht in einem betriebsbereiten Zustand befindet, minimieren.

Die genannte Aufgabe wird auch durch ein Computersystem sowie durch ein Computerprogrammprodukt gemäß den unabhängigen Patentansprüchen gelöst.

Weitere vorteilhafte Ausgestaltungen der Erfindung sind in der nachfolgenden ausführlichen Beschreibung von Ausführungsbeispielen sowie den abhängigen Patentansprüchen offenbart.

Die Erfindung wird nachfolgend anhand von Ausführungsbeispielen unter Bezugnahme auf Figuren näher erläutert. In den Figuren zeigen:
- Figur 1: eine schematische Darstellung einer beispielhaften Systemarchitektur eines Computersystems,
- Figur 2: ein logisches Ablaufdiagramm eines Verfahrens zum Ausführen eines Dienstprogramms und
- Figur 3: ein zeitliches Ablaufdiagramm eines Verfahrens zum Aktualisieren einer Firmwarekomponente.

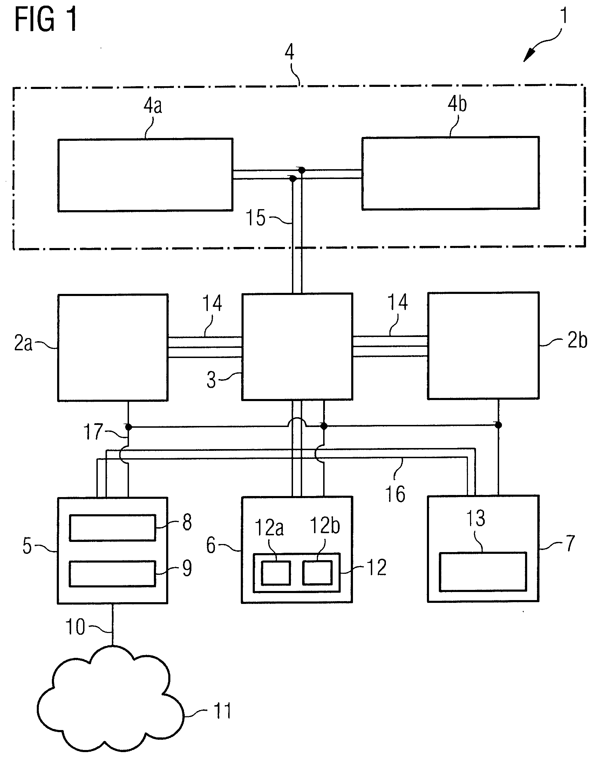

Figur 1 zeigt eine schematische Darstellung einer beispielhaften Architektur eines Computersystems 1, das zur Ausführung der nachfolgend beschriebenen Verfahren geeignet ist.

Das Computersystem 1 umfasst im Ausführungsbeispiel zwei Prozessoren 2a und 2b. Im Ausführungsbeispiel handelt es sich beispielsweise um ein so genanntes symmetrisches Multiprozessorsystem. Selbstverständlich lässt sich das erfindungsgemäße Verfahren auch in Einzelprozessorsystemen oder in Systemen mit einem oder mehreren Mehrkernprozessoren verwenden.

Die Prozessoren 2a und 2b sind über einen Chipsatz 3 mit zwei Speichermodulen 4a und 4b eines Hauptspeichers 4 verbunden. Bei den Speichermodulen 4a und 4b handelt es sich um flüchtige RAM-Speicher. Auf die genaue Art und Anordnung der Speichermodule 4a und 4b kommt es jedoch nicht an. Die Speichermodule 4a und 4b dienen im Wesentlichen zum Ablegen von Daten, die aktuell von einem oder beiden der Prozessoren 2a oder 2b verarbeitet werden.

Des Weiteren umfasst das Computersystem 1 einen Systemmanagementbaustein 5, ein Systemmodul 6 sowie eine Grafikkomponente 7. Der Systemmanagementbaustein 5 umfasst einen Mikrocontroller 8 sowie einen nicht-flüchtigen Speicher 9. Des Weiteren ist der Systemmanagementbaustein 5 über einen Netzwerkanschluss 10 mit einem Datennetzwerk 11 verbunden. Bei dem Datennetzwerk 11 handelt es sich beispielsweise um ein lokales Netzwerk (LAN) oder das Internet.

Das Systemmodul 6 umfasst unterschiedliche Komponenten zum Betrieb des Computersystems. Unter anderem umfasst das Systemmodul 6 eine Echtzeituhr, einen so genannten General Purpose Input/Output (GPIO) Baustein, sowie einen nicht-flüchtigen Speicher 12 zum Speichern einer oder mehrerer Firmwarekomponenten. In dem nicht-flüchtigen Speicher 12 ist beispielsweise ein so genanntes BIOS-Programm oder auch Komponenten eines so genannten Extensible Firmware Interfaces (EFI) zum Initialisieren des Computersystems 1 abgelegt. Im Ausführungsbeispiel sind beispielhaft zwei Firmwarekomponenten 12a und 12b dargestellt. Selbstverständlich können die unterschiedlichen Komponenten des Systemmoduls 6 auch teilweise oder ganz in anderen Modulen des Computersystems 1, insbesondere in dem Chipsatz 3 oder den Prozessoren 2a und 2b angeordnet werden.

Die Grafikkomponente 7 umfasst einen nicht dargestellten Grafikprozessor sowie einen Grafikspeicher 13 zum Ablegen von Grafikdaten. Bei dem Grafikspeicher 13 handelt es sich in der Regel um einen flüchtigen Speicher mit besonders kurzen Zugriffzeiten. Ein solcher Speicher wird in der Regel als VRAM bezeichnet. Bei der Grafikkomponente 7 kann es sich entweder um einen Teil eines integrierten Chipsatzes einer Hauptplatine des Computersystems, um einen fest auf der Hauptplatine aufgebrachten Grafikchip oder um eine separate Grafikkomponente handeln, die in einem Erweiterungssteckplatz des Computersystems angeordnet ist. Dabei kann der Grafikspeicher 13 entweder durch gesonderte Speichermodule oder durch Teile der Speichermodule 4a und/oder 4b gebildet werden.

In einer weiteren, nicht dargestellten Ausgestaltung umfasst ein Computersystem einen so genannten intelligenten Server Management Controller auf einer I/O-Riserkarte in einem Erweiterungssteckplatz einer Hauptplatine. Der intelligente Server Management Controller umfasst unter anderem einen Super-I/O (SIO) Baustein, einen Netzwerkanschluss, einen Systemmanagementbaustein sowie einen Grafikbaustein. Der Systemmanagementbaustein umfasst einen integrierten Microcontroller, einen Interruptcontroller, mehrere integrierte Systemmanagementbus-Treiber, flüchtigen Speicher und einen Netzwerkschnittstellentreiber. Der Grafikbaustein umfasst einen integrierten Grafikkern, eine PCI-Speicherschnittstelle und eine Speicherschnittstelle zur Unterstützung von bis zu 128MByte Grafikspeicher. Ein derartiger intelligenter Server Management Controller umfasst alle wesentlichen Komponenten zur Durchführung des nachfolgend beschriebenen Verfahrens.

Die verschiedenen Funktionseinheiten des Computersystems 1 sind durch einen oder mehrere Busse miteinander verbunden. Im Ausführungsbeispiel ist der Chipsatz 3 mit den Prozessoren 2a und 2b über einen oder mehrere Prozessorbusse 14 verbunden. Des Weiteren ist der Chipsatz 3 mit den Speichermodulen 4a und 4b über einen Speicherbus 15 verbunden. Schließlich ist der Chipsatz 3 mit dem Systembaustein 5, dem Systemmodul 6 und der Grafikkomponente 7 über einen Erweiterungsbus 16, beispielsweise einen parallelen PCI-Bus oder seriellen PCI Express-Bus, verbunden. Zusätzlich sind die Prozessoren 2a und 2b, der Chipsatz 3, der Systemüberwachungsbaustein 5, das Systemmodul 6 und die Grafikkomponente 7 über einen so genannten Systemmanagementbus 17 miteinander verbunden, beispielsweise einen seriellen I²C-Bus. Auch andere, proprietäre Verbindungen sind möglich, insbesondere zur Verbindung von Funktionseinheiten integrierter Komponenten wie des oben beschriebenen intelligenten Server Management Controller.

Der Systemmanagementbus 17 funktioniert unabhängig von dem Erweiterungsbus 16 und hat in der Regel eine geringere Busbandbreite. Während der Erweiterungsbus 16 in der Regel zum Übertragen von Daten von großem Umfang im Betrieb des Computersystems dient, ist der Systemmanagementbus 17 dazu eingerichtet, einzelne Komponenten des Computersystems 1 zu überwachen, abzufragen oder zu konfigurieren. Hierzu kann neben dem Chipsatz 3 oder den Prozessoren 2a und 2b auch der Systemmanagementbaustein 5 die Kontrolle über den Systemmanagementbus 17 übernehmen. In einer Ausgestaltung ist der Systemmanagementbaustein 5 des Weiteren dazu eingerichtet, auch die Kontrolle über den Erweiterungsbus 16 zu übernehmen.

Die zuvor beschriebene Computerarchitektur hat nur beispielhaften Charakter. Neben der dargestellten Switch-Architektur mit einem zentralen Chipsatz 3 und davon ausgehenden, weitgehend unabhängig voneinander arbeitenden Bussystemen 14, 15, 16 und 17 sind auch weitere Computerarchitekturen wie Hub- oder Bus-Architekturen bekannt, die sich zur Ausführung der nachfolgend beschriebenen Verfahren eignen. Auch eine direkte Vernetzung sämtlicher Komponenten untereinander, also beispielsweise das Vorsehen jeweils eines so genannten direkten Links zwischen den Prozessoren 2a und 2b und den Speichermodulen 4a und 4b und optional zu den weiteren Komponenten 5, 7 und 12 ist möglich, um besonders leistungsfähige Systemarchitekturen zu schaffen.

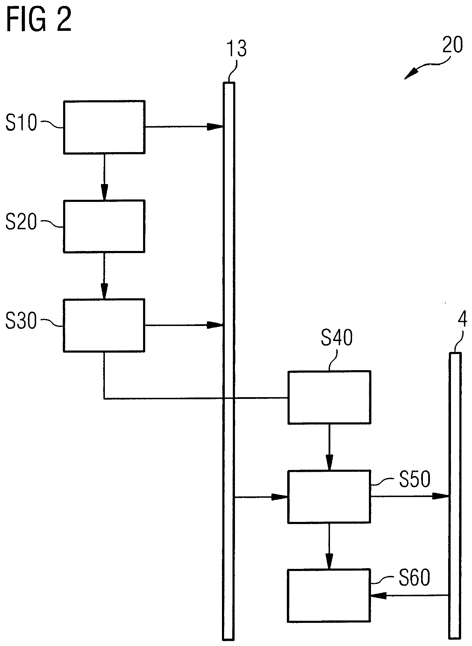

In der Figur 2 ist ein schematisches Ablaufdiagramm eines Verfahrens 20 zum Ausführen eines Dienstprogramms auf dem Computersystem 1 dargestellt. Die Verfahrensschritte S10, S20 und S30 im linken Bereich der Figur 2 werden durch den Mikrocontroller 8 des Systemmanagementbausteins 5 ausgeführt. Die im rechten Teil der Figur 2 dargestellten Verfahrensschritte S40, S50 und S60 werden durch den Prozessor 2a und/oder den Prozessor 2b des Computersystems 1 ausgeführt. Die Balken 13 und 4 zwischen beziehungsweise rechts von den Blöcken von Verfahrensschritten kennzeichnen die Aktivität des Grafikspeichers 13 beziehungsweise des Hauptspeichers 4.

In dem Verfahrensschritt S10 wird der Systemüberwachungsbaustein 5 sowie der Grafikspeicher 13 des Computersystems 1 aktiviert. Hierzu wird beispielsweise der Mikrocontroller 8 des Systemmanagementbausteins 5 durch einen Interrupt aufgeweckt. Der Interrupt kann beispielsweise durch eine integrierte Echtzeituhr des Systemmanagementbausteins 5 oder durch das Empfangen eines so genannten Wake on LAN (WoL) Pakets über das Datennetzwerk 11 ausgelöst werden. Nachfolgend wird der Grafikspeicher 13 oder die gesamte Grafikkomponente 7 mit einer Betriebsspannung versorgt. Die Ansteuerung der Grafikkomponente 7 beziehungsweise des darin enthaltenen Grafikspeichers 13 wird von dem Systemmanagementbaustein 5 über den Erweiterungsbus 16, den Systemmanagementbus 17 oder eine andere geeignete Verbindung vorgenommen. Besonders einfach ist dies bei der Verwendung des Grafikspeichers des oben beschriebenen intelligenten Server Management Controllers. Zum Aktivieren des Grafikspeichers 13 über den Erweiterungsbus 16 oder den Systemmanagementbus 17 ist die Funktion und somit die Stromversorgung der Prozessoren 2a und 2b nicht erforderlich. Stattdessen übernimmt der Systemmanagementbaustein 5 selbst die Kontrolle über den Bus 16 oder 17.

In dem Schritt S20 lädt der Systemmanagementbaustein ein gepacktes Speicherabbild von einer Datenquelle in dem Datennetzwerk 11 herunter. Für das beschriebene Verfahren ist es unerheblich, ob das Herunterladen von dem Systemmanagementbaustein 5 selbst oder von einem Rechner zum Steuern von Wartungsprozessen in dem Datennetzwerk 11 ausgelöst wird. Beispielsweise kann der Mikrocontroller 8 des Systemmanagementbausteins 5 Programmcode zum Bereitstellen einer Weboberfläche ausführen, auf die von einem entfernten Wartungsrechner aus zugegriffen wird. Das Übertragen des eigentlichen Speicherabbildes kann dann beispielsweise über das so genannte Trivial File Transfer Protocol (TFTP) gemäß RFC 1350 von dem Wartungsrechner zu dem Systemüberwachungsbaustein 5 vorgenommen werden.

Nachfolgend oder parallel zum Herunterladen des Speicherabbilds wird im Schritt S30 das herunter geladene Speicherabbild oder Teile davon in dem Grafikspeicher 13 abgelegt. Dabei werden die Daten über den Erweiterungsbus 16, den Systemmanagementbus 17 oder eine andere geeignete Verbindung wie etwa einen internen Bus eines intelligenten Server Management Controllers in den Grafikspeicher 13 der Grafikkomponente 7 übertragen.

Je nach Umfang des herunterzuladenden Speicherabbilds können die Schritt S20 und S30 zwischen wenigen Sekunden und mehreren Stunden in Anspruch nehmen. Jedoch ist es in dieser Phase des Verfahrens 20 nicht erforderlich, die Prozessoren 2a oder 2b oder den Chipsatz 3 und die Speichermodule 4a und 4b mit einer Betriebsspannung zu versorgen. Das Herunterladen des Speicherabbilds kann daher insbesondere in einem Ruhe- oder Energiesparmodus des Computersystems 1 durchgeführt werden und sorgt so für eine verbesserte Energiebilanz.

Nachdem das Speicherabbild vollständig heruntergeladen und in dem Grafikspeicher 13 abgelegt worden ist, aktiviert der Systemmanagementbaustein 5 die übrigen Komponenten, die auf der Hauptplatine des Computersystems 1 angeordnet sind. Insbesondere werden nachfolgend die Prozessoren 2a und 2b, der Chipsatz 3 und die Speichermodule 4a und 4b mit einer Betriebsspannung versorgt. Alternativ können die nachfolgenden Schritte auch beim nächsten Einschalten des Computersystems 1 durch einen Benutzer ausgeführt werden.

Das Anlegen einer Betriebsspannung an alle wesentlichen Komponenten des Computersystems 1 führt zur Aktivierung und Ausführung einer Systemfirmware des Computersystems 1 im Schritt S40 durch wenigstens einen der Prozessoren 2a oder 2b. Beispielsweise wird durch den Chipsatz 3 ein in dem nicht-flüchtigen Speicher 12 abgelegtes BIOS-Programm oder eine Systemfirmwarekomponente 12a abgerufen und durch den Prozessor 2a ausgeführt.

In einem nachfolgenden Schritt S50 wird das in dem Grafikspeicher 13 abgelegte Speicherabbild von der Systemfirmware 12a in den durch die Speichermodule 4a und 4b bereitgestellten Hauptspeicher 4 kopiert.

Da sowohl der Grafikspeicher 13 als auch die Speichermodule 4a und 4b über leistungsfähige Bussysteme 16 beziehungsweise 15 mit dem Chipsatz 3 und darüber mittelbar mit den Prozessoren 2a und 2b verbunden sind, können auch umfangreiche Daten in sehr kurzer Zeit kopiert werden. Beispielsweise kann ein Speicherabbild mit einem Datenumfang von etwa vier Megabyte in deutlich unter einer Sekunde aus dem Grafikspeicher 13 in die Speichermodule 4a oder 4b kopiert werden. Für einen Benutzer des Computersystems 1 tritt daher beim Starten keine oder nur eine kaum wahrnehmbare Verzögerung des Startprozesses auf. Auf jeden Fall ist die Zeitdauer gegenüber der Zeitdauer, die zum Herunterladen des Speicherabbildes durch die Systemfirmware 12a selbst benötigt würde, deutlich reduziert.

Sofern der Grafikspeicher 13 ebenso wie der Hauptspeicher 4 durch dieselben physikalischen Speichermodule 4a und 4b bereitgestellt wird, kann anstelle des Kopierens auch eine Neuzuordnung einzelner Speicherblöcke der Speichermodule 4a oder 4b zu dem Hauptspeicher 4 und dem Grafikspeicher 13 treten.

In einem abschließenden Verfahrensschritt S60 wird ein Dienstprogramm, das in dem Speicherabbild enthalten ist, durch einen der Prozessoren 2a oder 2b ausgeführt. Beispielsweise kann das Speicherabbild das Abbild eines bootfähigen Datenträgers enthalten, von dem das BIOS-Programm oder die Systemfirmwarekomponente 12a des so genannten Extended Firmware Interfaces nach Abschluss des Kopierens im Schritt S50 bootet. Daraufhin werden automatisch in dem Abbild enthaltene Dienstprogramme und damit eventuell verknüpfte Daten ausgeführt beziehungsweise geladen.

In einem bevorzugten Ausführungsbeispiel handelt es sich bei dem Dienstprogramm um ein Dienstprogramm zum Aktualisieren einer Firmwarekomponente 12a oder 12b des Computersystems. Das Dienstprogramm kann dabei überprüfen, ob und gegebenenfalls welche Daten zum Aktualisieren der Firmwarekomponenten 12a und 12b des Computersystems 1 in dem übertragenen Speicherabbild vorhanden sind. Hierzu kann das Speicherabbild insbesondere auch ein Skript oder sonstige Konfigurationsdaten enthalten, die eine Aktualisierung von der konkreten Systemkonfiguration des Computersystems 1 abhängig macht. In diesem Fall kann ein generelles Speicherabbild an alle Rechner zum Beispiel eines Firmennetzwerkes übertragen werden. Nachfolgend können einzelne, sämtliche oder auch gar keine der übertragenen Daten zum Aktualisieren der Firmwarekomponenten 12a und 12b der einzelnen Computersysteme 1 in Abhängigkeit von deren Systemkonfiguration in den nicht-flüchtigen Speicher 12 oder sonstige nicht-flüchtige Speichereinheiten der Computersysteme 1 programmiert werden.

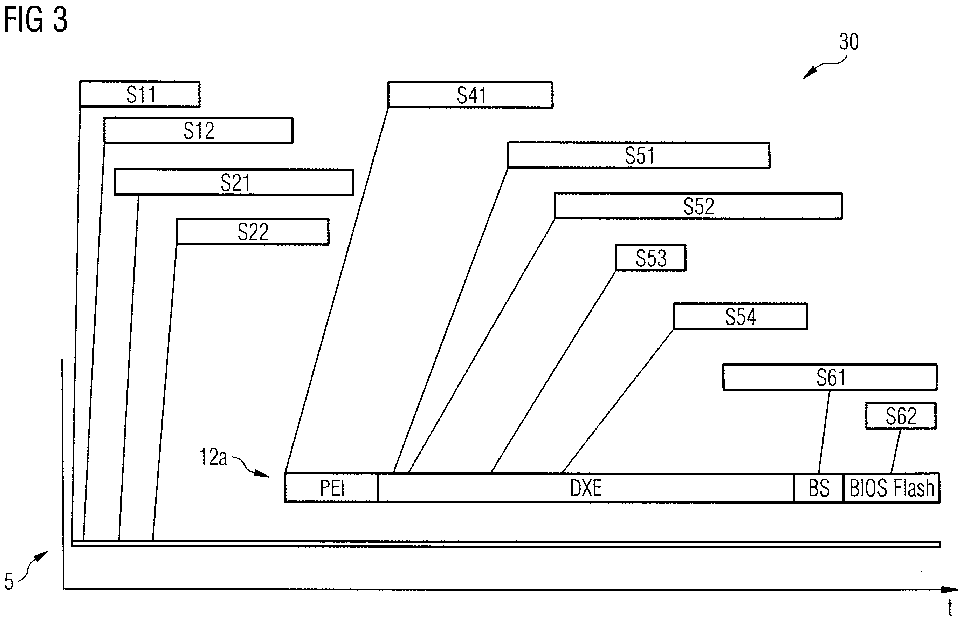

Figur 3 zeigt den zeitlichen Ablauf eines Verfahrens 30 zum Aktualisieren einer Firmwarekomponente 12a oder 12b im Detail. Im unteren Bereich ist die Aktivität des Systemmanagementbausteins 5 dargestellt. Im oberen Bereich ist die Aktivität der Systemfirmware 12a der Hauptplatine des Computersystems 1 dargestellt. Bei der Systemfirmware 12a handelt es sich um eine Firmware gemäß dem Unified Extended Firmware Interface (UEFI).

In einem ersten Schritt S11 wird der Systemmanagementbaustein 5 aktiviert. In einem nachfolgenden Schritt S12 initialisiert der Systemmanagementbaustein 5 den Grafikspeicher 13.

In einem nachfolgenden Schritt S21 wird ein Webinterface zum Aktualisieren einer Firmwarekomponente 12a oder 12b aufgerufen, die durch den Systemmanagementbaustein 5 bereitgestellt wird. Von einem entfernten Rechner können entsprechende Parameter zum Aktualisieren der Firmware beziehungsweise zum Herunterladen des Speicherabbilds eingestellt werden. Wird der Vorgang nachfolgend durch Bestätigen eines entsprechenden Steuerelementes ausgelöst, wird in einem nachfolgenden Schritt S22 ein von dem Wartungsrechner bereitgestelltes Speicherabbild per TFTP übertragen und direkt im Grafikspeicher 13 abgelegt.

Bevorzugt umfasst das Speicherabbild das Abbild eines bootfähigen Datenträgers umfassend ein Dienstprogramm zum Aktualisieren der Firmwarekomponente 12a oder 12b und die weiteren Daten, die von dem Dienstprogramm zum Aktualisieren der Firmwarekomponente 12a oder 12b benötigt werden. Insbesondere umfasst das Abbild aktualisierte Firmwarekomponenten 12a' oder 12b' für die Systemfirmware 12a oder andere Systemkomponenten 12b.

Bevorzugt wird das Speicherabbild gepackt zwischen dem Wartungsrechner und dem Systemmanagementbaustein 5 übertragen. Dabei umfasst der Begriff "gepackt" sowohl das bloße Zusammenfassen unterschiedlicher Dateien zu einem einheitlichen Datenblock oder Archivfile als auch die optionale Kompression der Daten zum Verringern der Menge der übertragenen Daten.

Nachdem das Übertragen des Speicherabbilds abgeschlossen ist, wird die Hauptplatine des Computersystems 1 mit den darauf enthaltenen Komponenten in einen Betriebszustand versetzt. Gemäß dem UEFI-Standard wird in einem Schritt S41 zunächst eine so genannte Pre-EFI-Initiation (PEI) Prozedur ausgeführt. In der PEI werden grundlegende Funktionen zum Ausführen einzelner Firmwarekomponenten bereitgestellt.

In der so genannten Driver Execution Environment (DXE) der UEFI-Firmware wird nachfolgend in einem Schritt S51 eine temporäre PCI-Initialisierung durch die Systemfirmware 12a durchgeführt, um eine Verbindung zu dem Grafikspeicher 13 herzustellen. Hierzu wird im Ausführungsbeispiel der Erweiterungsbus 16 für einen Datenabruf aus dem gesonderten Grafikspeicher 13 einer PCI-Grafikkomponente 7 initialisiert. In einer anderen Ausgestaltung wird das Speicherabbild aus einem integrierten Speicher eines intelligenten Servermanagement Controllers abgerufen. In einem nachfolgenden Schritt S52 wird das in dem Grafikspeicher 13 gespeicherte Speicherabbild von der Systemfirmware 12a in den Hauptspeicher 4 übertragen.

Nachfolgend findet in einem Schritt 53 eine vollständige Initialisierung des Erweiterungsbusses 16 statt. Erst nach der vollständigen Initialisierung des Erweiterungsbusses 16 im Schritt S53 wird der Grafikspeicher 13 beziehungsweise die Grafikkomponente 7 initialisiert, sodass sie für einen nachfolgenden Betrieb des Computersystems 1 zur Verfügung stehen. In einem Schritt S54 wird hierzu eine weitere Firmwarekomponente der Grafikkomponente 7 gestartet. Über die weitere Firmwarekomponente werden Funktionen der Grafikkomponente 7, insbesondere die zur Verfügung stehenden Grafikmodi, für das erweiterte Firmwareinterface zugänglich. Erst hiernach werden Statusmeldungen und sonstige Informationen des Computersystems 1 über die Grafikkomponente 7 ausgegeben.

Sind sämtliche Hardwaretreiber über das Ausführen der entsprechenden Firmwarekomponenten initialisiert worden, entpackt die Systemfirmware 12a im Schritt S61 das übertragende Speicherabbild und bootet einen darin enthaltenen speziellen Bootloader oder ein vollständiges Betriebssystem (BS) des dekomprimierten Speicherabbilds im Hauptspeicher 4. Im Ausführungsbeispiel ruft das Betriebssystem im Schritt S62 seinerseits ein Dienstprogramm zum Aktualisieren der Firmwarekomponente 12a oder 12b auf, das ebenfalls in dem Speicherabbild enthalten ist. Dieses Dienstprogramm ruft wiederum weitere Konfigurationseinstellungen, Skripte und/oder Daten aus dem Speicherabbild ab, um einzelne oder alle der Firmwarekomponenten 12a und/oder 12b des nicht-flüchtigen Speichers 12 oder sonstiger nicht-flüchtiger Speicher des Computersystems 1 zu aktualisieren.

Sofern die Aktualisierung der Firmwarekomponenten 12a oder 12b einen Neustart des Computersystems erforderlich macht, kann dieser als letzte Aktion von dem Dienstprogramm ausgelöst werden. Das Computersystem bootet dann unmittelbar nach dem Aktualisieren der Firmwarekomponente 12a oder 12b von der gegebenenfalls aktualisierten Systemfirmware 12a bzw. 12a'.

Anstelle der in der Figur 3 im Einzelnen dargestellten Methode zum Aktualisieren einer Firmwarekomponente 12a oder 12b kann das zuvor beschriebene Verfahren auch zum Ausführen anderer Dienstprogramme auf einem Computersystem eingesetzt werden, wie es allgemein unter Bezugnahme auf die Figur 2 beschrieben wurde. Beispielsweise kann ein Speicherabbild umfassend ein komplettes Betriebssystem, das ausschließlich zu Wartungszwecken auf dem Computersystem 1 ausgeführt wird, übertragen und aktiviert werden. Auf diese Weise ist es möglich, auf einem Computersystem 1, das üblicherweise mit einem ersten Betriebssystem wie beispielsweise Microsoft Windows ausgeführt wird, ein zweites Betriebssystem wie beispielsweise Linux ausschließlich zu Wartungszwecken auszuführen, das auf dem Computersystem 1 nicht dauerhaft installiert ist.

Selbstverständlich können auch andere Daten als Betriebssysteme, beispielsweise zu installierende Softwaretreiber oder Softwarekomponenten auf diesem Wege an das Computersystem 1 übertragen und dort ausgeführt werden. Der Vorteil einer derartigen Ausführungsmethode liegt unter anderem in der oben beschriebenen Verbesserung der Energiebilanz. Des Weiteren kann die Ausführung von Prozessen im Hintergrund beziehungsweise in einem Ruhezustand des Computersystems 1 vorbereitet werden.

Die einzelnen Schritte der oben beschriebenen Verfahren können in ihrer Reihenfolge vertauscht werden oder auch ganz oder teilweise parallel zueinander ausgeführt werden, soweit die Ausführung eines Schrittes nicht von der vollständigen Ausführung eines anderen Schrittes abhängt. Selbstverständlich können einzelne Schritte der Verfahren auch durch unterschiedliche Datenverarbeitungselemente, wie beispielsweise die Prozessoren 2a und 2b, durchgeführt werden.

Bevorzugt werden die Verfahren als Computerprogramme verwirklicht. Unter Computerprogrammen im Sinne dieser Beschreibung werden dabei sowohl der Quellcode als auch daraus hervorgegangener ausführbarer Programmcode verstanden, der bei seiner Ausführung die beschriebenen Verfahren durchführt. Das Computerprogramm kann insbesondere auf einem physikalischen Speichermedium wie einem nichtflüchtigen Speicherbaustein, einer Diskette, CD oder DVD vorliegen oder als bloße Signalfolge über ein Datennetzwerk übertragen werden.

### Bezugszeichenliste

- 1: Computersystem
- 2a, 2b: Prozessor
- 3: Chipsatz
- 4: Hauptspeicher
- 4a, 4b: Speichermodul
- 5: Systemmanagementbaustein
- 6: Systemmodul
- 7: Grafikkomponente
- 8: Mikrocontroller
- 9: nicht-flüchtiger Speicher
- 10: Mehrzweckanschluss
- 11: Datennetzwerk
- 12: nicht-flüchtiger Speicher
- 12a, 12b: Firmwarekomponente
- 13: Grafikspeicher
- 14: Prozessorbus
- 15: Speicherbus
- 16: Erweiterungsbus
- 17: Systemmanagementbus

- 20: Verfahren zum Ausführen eines Dienstprogramms
- 30: Verfahren zum Aktualisieren einer Firmwarekomponente

## Patentansprüche

1. Verfahren zum Ausführen eines Dienstprogramms auf einem Computersystem (1) mit einem unabhängig von einem Prozessor (2a, 2b) des Computersystems (1) betreibbaren Systemmanagementbaustein (5), wobei der Systemmanagementbaustein (5) einen Mikrocontroller (8) sowie einen nicht-flüchtigen Speicher (9) umfasst, über einen Netzwerkanschluss (10) mit einem Datennetzwerk (11) verbunden und zur Fernwartung des Computersystems (1) eingerichtet ist, umfassend die Schritte:
- Aktivieren eines Grafikspeichers (13) des Computersystems (1),
- Herunterladen eines Speicherabbilds umfassend das auszuführende Dienstprogramm durch den Systemmanagementbaustein (5) von einer Datenquelle in dem Datennetzwerk (11), wobei das auszuführende Dienstprogramm zum Aktualisieren einer Firmwarekomponente (12a, 12b) des Computersystems (1) eingerichtet ist und in dem Speicherabbild des Weiteren Daten zum Aktualisieren der Firmwarekomponente (12a, 12b) enthalten sind,
- Ablegen des Speicherabbilds in dem Grafikspeicher (13) durch den Systemmanagementbaustein (5),
- Kopieren des Speicherabbilds von dem Grafikspeicher (13) in einen Hauptspeicher (4) des Computersystems (1) durch den Prozessor (2a, 2b) des Computersystems (1) und
- Ausführen des Dienstprogramms durch den Prozessor (2a, 2b) des Computersystems (1) zum Aktualisieren der Firmwarekomponente (12a, 12b).

2. Verfahren nach Anspruch 1, **dadurch gekennzeichnet, dass**
das auszuführende Dienstprogramm zum Aktualisieren einer Systemfirmware (12a) (12a) des Computersystems (1) eingerichtet ist.

3. Verfahren nach einem der Ansprüche 1 oder 2,
**dadurch gekennzeichnet, dass**
das Speicherabbild ein Abbild eines bootfähigen Datenträgers mit dem darauf gespeicherten Dienstprogramm enthält.

4. Verfahren nach einem der Ansprüche 1 bis 3,
**dadurch gekennzeichnet, dass**
im Schritt des Herunterladens ein gepacktes Speicherabbild geladen wird und vor dem Ausführen des Dienstprogramms das gespeicherte Speicherabbild durch die Systemfirmware entpackt wird.

5. Verfahren nach einem der Ansprüche 1 bis 4,
**dadurch gekennzeichnet, dass**
der Schritt des Kopierens vor einer Aktivierung einer Firmwarekomponente zum Initialisieren einer Grafikkomponente (7) ausgeführt wird.

6. Verfahren nach einem der Ansprüche 1 bis 5,
**dadurch gekennzeichnet, dass**
die Schritte des Aktivierens des Grafikspeichers (13) sowie des Herunterladens und Ablegens des Speicherabbilds in einem Ruhezustand des Computersystems (1) ausgeführt werden und die Schritte des Kopierens des Speicherabbilds und Ausführens des Dienstprogramms in einem Betriebszustand des Computersystems (1) ausgeführt werden.

7. Verfahren nach einem der Ansprüche 1 bis 5,
**dadurch gekennzeichnet, dass**
die Schritte des Herunterladens des Speicherabbilds in einem vorherigen Betriebszustand des Computersystems (1) und die Schritte des Aktivierens des Grafikspeichers (13) und Ablegens des Speicherabbilds bei einem Neustart des Computersystems (1) ausgeführt werden und die Schritte des Kopierens des Speicherabbilds und Ausführens des Dienstprogramms in einem auf den Neustart folgenden Betriebszustand des Computersystems (1) ausgeführt werden.

8. Computersystem (1), umfassend
- einen ersten nicht-flüchtigen Speicher (12) zum Speichern einer Systemfirmware (12a),
- wenigstens einen Prozessor (2a, 2b) zum Ausführen der Systemfirmware,
- einen Hauptspeicher (4) und
- wenigstens einen, unabhängig von dem Prozessor (2a, 2b) betreibbaren Systemmanagementbaustein (5), wobei der Systemmanagementbaustein (5) einen Mikrocontroller (8) sowie einem zweiten nicht-flüchtigen Speicher (9) zum Speichern von Steuerprogrammcode umfasst, über einen Netzwerkanschluss (10) mit einem Datennetzwerk (11) verbunden und zur Fernwartung des Computersystems (1) eingerichtet ist, wobei
- der Steuerprogrammcode dazu eingerichtet ist, einen Grafikspeicher (13) des Computersystems (1) zu aktivieren, ein Speicherabbild umfassend ein auszuführendes Dienstprogramm von einer Datenquelle in dem Datennetzwerk (11) herunterzuladen und in dem Grafikspeicher (13) abzulegen,
- das auszuführende Dienstprogramm zum Aktualisieren einer Firmwarekomponente (12a, 12b) des Computersystems (1) eingerichtet ist und in dem Speicherabbild des Weiteren Daten zum Aktualisieren der Firmwarekomponente (12a, 12b) enthalten sind, und
- die Systemfirmware (12a) dazu eingerichtet ist, das Speicherabbild von dem Grafikspeicher (13) in den Hauptspeicher (4) des Computersystems (1) zu kopieren und das Dienstprogramm durch den wenigstens einen Prozessor (2) des Computersystems zum Aktualisieren der Firmwarekomponente (12a, 12b) auszuführen.

9. Computerprogrammprodukt umfassend ausführbaren Programmcode, wobei der Programmcode beim Ausführen auf wenigstens einem Datenverarbeitungselement eines Computersystems (1) ein Verfahren nach einem der Ansprüche 1 bis 7 durchführt.

10. Computerprogrammprodukt nach Anspruch 9,
**dadurch gekennzeichnet, dass**
der Programmcode einen ersten Teil zum Ausführen durch einen Mikrocontroller (8) eines Systemmanagementbausteins (5) und einen zweiten Teil zur Ausführung durch einen davon unabhängigen Prozessor (2a, 2b) eines Computersystems (1) umfasst.

## Claims

1. A method of executing a utility program on a computer system (1) with a system management module (5) that can be operated independently from a processor (2a, 2b) of the computer system (1), wherein the system management module (5) includes a microcontroller (8) as well as a non-volatile memory (9), is connected to a data network (11) via a network port (10) and is configured for remote maintenance of the computer system (1), including the steps:
- activating a graphics memory (13) of the computer system (1),
- downloading a memory map, including the utility program to be executed, by the system management module (5) from a data source in the data network (11), wherein the utility program to be executed is set up to update a firmware component (12a, 12b) of the computer system (1), and, data to update the firmware component (12a, 12b) is also contained in the memory map,
- storing the memory map in the graphics memory (13) by the system management module (5),
- copying the memory map from the graphics memory (13) to a main memory (4) of the computer system (1) by the processor (2a, 2b) of the computer system (1), and
- executing the utility program through the processor (2a, 2b) of the computer system (1) to update the firmware component (12a, 12b).

2. The method according to claim 1, **characterized in that**
the utility program to be executed is set up to update a system firmware (12a) of the computer system (1).

3. The method according to one of claims 1 or 2,
**characterized in that**
the memory map contains a map of a bootable data carrier with the utility program stored thereon.

4. The method according to one of claims 1 to 3,
**characterized in that**
a packed memory map is loaded in the downloading step and, prior to execution of the utility program, the stored memory map is unpacked by the system firmware.

5. The method according to one of claims 1 to 4,
**characterized in that**
the copying step is performed prior to an activation of a firmware component to initialize a graphics component (7).

6. The method according to one of claims 1 to 5,
**characterized in that**
the steps of activating the graphics memory (13) as well as downloading and storing the memory map are executed in a quiescent state of the computer system (1), and the steps of copying the memory map and executing the utility program are executed in an operating state of the computer system (1).

7. The method according to one of claims 1 to 5,
**characterized in that**
the step of downloading the memory map is executed in a prior operating state of the computer system (1) and the steps of activating the graphics memory (13) and storing the memory map are executed when the computer system (1) is restarted, and the steps of copying the memory map and executing the utility program are executed in an operating state of the computer system (1) which follows the restart.

8. A computer system (1), including
- a first nonvolatile memory (12) for storing a system firmware (12a),
- at least one processor (2a, 2b) for executing the system firmware,
- a main memory (4), and
- at least one system management module (5) which can be operated independently of the processor (2a, 2b), wherein the system management module (5) includes a microcontroller (8) as well as a second nonvolatile memory (9) for storing control program code, is connected to a data network (11) via a network port (10) and set up for remote maintenance of the computer system (1),
wherein
- the control program code is configured to activate a graphics memory (13) of the computer system (1), to download a memory map including a utility program to be executed from a data source in the data network (11) and to store this memory map in the graphics memory (13),
- the utility program to be executed is configured to update a firmware component (12a, 12b) of the computer system (1) and data to update the firmware component (12a, 12b) is also contained in the memory map, and
- the system firmware (12a) is configured to copy the memory map from the graphics memory (13) to the main memory (4) of the computer system (1) and to execute the utility program using the at least one processor (2) of the computer system to update the firmware component (12a, 12b).

9. A computer program product comprising executable program code, wherein the program code carries out a method according to one of claims 1 to 7 when executed on at least one data processing element of a computer system (1).

10. The computer program product according to claim 9,
**characterized in that**
the program code includes a first portion for execution by a microcontroller (8) of a system management module (5) and a second portion for execution by a processor (2a, 2b), which is independent thereof, of a computer system (1).

## Revendications

1. Procédé pour exécuter un programme de service sur un système informatique (1) avec un module de gestion de système exploitable indépendamment d'un processeur (2a, 2b) du système informatique (1), le module de gestion de système (5) comprenant un microcontrôleur (8) ainsi qu'une mémoire non-volatile (9), étant relié par un connecteur réseau (10) à un réseau de données (11) et étant configuré pour une télémaintenance du système informatique (1), comprenant les étapes :
- activation d'une mémoire graphique (13) du système informatique (1),
- téléchargement d'une image mémoire comprenant le programme de service à exécuter par le module de gestion du système (5) depuis une source de données dans le réseau de données (11), le programme de service à exécuter étant configuré pour la mise à jour d'un composant de microprogramme (12a, 12b) du système informatique (1) et en outre, des données complémentaires pour mettre à jour le composant de microprogramme (12a, 12b) étant contenues dans l'image mémoire,
- mémorisation de l'image mémoire dans la mémoire graphique (13) par le module de gestion de système (5),
- copie de l'image mémoire depuis la mémoire graphique (13) dans une mémoire principale (4) du système informatique (1) par le processeur (2a, 2b) du système informatique (1) et
- exécution du programme de service par le processeur (2a, 2b) du système informatique (1) pour la mise à jour du composant de microprogramme (12a, 12b).

2. Procédé selon la revendication 1, **caractérisé en ce que** le programme de service à exécuter est configuré pour la mise à jour d'un microprogramme de système (12a) du système informatique (1).

3. Procédé selon l'une quelconque des revendications 1 ou 2,
**caractérisé en ce que**
l'image mémoire contient une image d'un support de données démarrable ayant le programme de service stockée sur celui-ci.

4. Procédé selon l'une quelconque des revendications 1 à 3,
**caractérisé en ce que**
lors de l'étape de téléchargement, une image mémoire zippée est chargée et l'image mémoire stockée est dézippée par le microprogramme de système avant l'exécution du programme de service.

5. Procédé selon l'une quelconque des revendications 1 à 4,
**caractérisé en ce que**
l'étape de copie est exécutée avant d'une activation d'un composant de microprogramme pour initialiser un composant graphique (7).

6. Procédé selon l'une quelconque des revendications 1 à 5,
**caractérisé en ce que**
les étapes d'activation de la mémoire graphique (13) ainsi que du téléchargement et de mémorisation de l'image mémoire sont exécutées dans un mode veille du système informatique (1) et les étapes de copie de l'image mémoire et de l'exécution du programme de service sont exécutées dans un état de fonctionnement du système informatique (1).

7. Procédé selon l'une quelconque des revendications 1 à 5,
**caractérisé en ce que**
les étapes de téléchargement de l'image mémoire dans un état de fonctionnement antérieur du système informatique (1) et les étapes de l'activation de la mémoire graphique (13) et du mémorisation de l'image mémoire sont exécutées lors d'un redémarrage du système informatique (1) et les étapes de copiage de l'image mémoire et de l'exécution du programme de service sont exécutées dans un état de fonctionnement du système informatique (1) suite au redémarrage.

8. Système informatique (1) comprenant
- une première mémoire non-volatile (12) pour le stockage d'un microprogramme de système (12a),
- au moins un processeur (2a, 2b) pour l'exécution du microprogramme de système,
- une mémoire principale (4) et
- au moins un module de gestion de système (5) exploitable indépendamment du processeur (2a, 2b), le module de gestion de système (5) comprenant un microcontrôleur (8) ainsi qu'une deuxième mémoire (9) non-volatile pour le stockage d'un code de programme de commande, et étant relié par un connecteur réseau (10) à un réseau de données (11) et étant configuré pour la télémaintenance du système informatique (1),
- le code de programme de commande étant configuré pour activer une mémoire graphique (13) du système informatique (1), télécharger une image mémoire comprenant un programme de service à exécuter depuis une source de données dans le réseau de données (11) et de la stocker dans la mémoire graphique (13),
- le programme de service à exécuter pour la mise à jour d'un composant de microprogramme (12a, 12b) du système informatique (1) étant configuré et, en outre, des données complémentaires pour mettre à jour le composant de microprogramme (12a, 12b) se trouvent dans l'image mémoire, et
- le microprogramme de système (12a) étant configuré pour copier l'image mémoire de la mémoire graphique (13) dans la mémoire principale (4) du système informatique (1) et pour exécuter le programme de service par l'au moins un processeur (2) du système informatique pour la mise à jour du composant de microprogramme (12a, 12b).

9. Produit de programme informatique comprenant un code de programme exécutable, le code de programme réalisant lors de l'exécution sur un ou plusieurs éléments de traitement des données d'un système informatique (1) un procédé selon l'une quelconque des revendications 1 à 7.

10. Produit de programme informatique selon la revendication 9,
**caractérisé en ce que**
le code de programme comprend une première partie pour l'exécution par un microcontrôleur (8) d'un module de gestion de système (5) et une deuxième partie pour l'exécution par un processeur indépendant (2a, 2b) du celui-ci d'un système informatique (1).
